## Europäisches Patentamt
## European Patent Office
## Office européen des brevets

(19)

(11) Veröffentlichungsnummer: **0 004 677**
**B1**

(12) **EUROPÄISCHE PATENTSCHRIFT**

(45) Veröffentlichungstag der Patentschrift: **30.06.82**

(21) Anmeldenummer: **79101086.1**

(22) Anmeldetag: **09.04.79**

(51) Int. Cl.³: **E 06 B 5/16,** A 62 C 3/14, E 05 F 17/00

(54) **Vorrichtung zum Abdichten und Schliessen von Feuerschutzabschlüssen.**

(30) Priorität: **11.04.78 DE 2815515**
**17.02.79 DE 2906129**

(43) ·Veröffentlichungstag der Anmeldung:
**17.10.79 Patentblatt 79/21**

(45) Bekanntmachung des Hinweises auf die Patenterteilung:
**30.06.82 Patentblatt 82/26**

(84) Benannte Vertragsstaaten:
**BE CH DE FR GB IT LU NL SE**

(56) Entgegenhaltungen:
**DE - A - 2 547 818**
**DE - B - 1 220 276**
**DE - B - 1 282 553**
**DE - C - 1 027 085**

(73) Patentinhaber: **GTE Gesellschaft für Technische Entwicklung AG**
**Neuyorkstrasse 8**
**CH-8630 Rüti (CH)**

(72) Erfinder: **Richter, Klaus**
**Lausitzer Strasse 30**
**1000 Berlin 36 (DE)**

Courier Press, Leamington Spa, England.

der aufgebauten Vorrichtungen zum Abdichten und Schließen dieser Feuerschutzabschlüsse mittels dem Herausschwenken eines Teilstückes der Transportanlagenbauteile und danach anschließenden Brandversuchen ergänzt werden mußten.

"Vorrichtungen" zum Trennen von Schienen bei Transportanlagen sind bekannt. Diese sind jedoch nur für Feuerschutzabschlüsse im Sinne von Grundtyp Nr. 1 (einmaliges Schließen) verwendbar.

Es handelt sich dabei vorwiegend um Schienen, die bei Kleinförderanlagen Verwendung finden, und im Brandfall durch Entriegelungsbolzen mit Haftmagnet entriegelt werden und dann mittels Schwer- oder Federkraft wegklappen.

Weiterhin sind Feuerschutzabschlüsse bekannt, bei denen ein Schienenstück auf einer Schiebevorrichtung befestigt ist und damit parallel verschiebbar aus der Bewegungsbahn des Dichtelementes heraus bewegbar ist. Außerdem sind noch Feuerschutzabschlüsse bekannt, bei denen der Brandschutz nicht durch das Entfernen der Transportschienen bewirkt wird, sondern bei denen ein am unteren oder seitlichen Ende des bewegbaren Dichtelementes angeordneter Dichtungsstreifen in einen ca. 4—5 mm breiten Schlitz eines Bauelementes der durch die Brandwandöffnung hindurchgeführten Transportanlage eingreift, und damit eine gewisse Abdichtung erzielt werden soll, wobei der Dichtstreifen auch aus aufschäumendem Material bestehen kann.

Vorrichtungen der vorgenannten Beschreibung zur Verwendung bei Feuerschutzabschlüssen nach Grundtyp Nr. 2 sind überhaupt nicht bekannt.

Ausführliche Untersuchungen an diesen bekannten Vorrichtungen zum Herausbewegen von Schienenstücken und an den Feuerschutzabschlüssen mit Abdichtvorrichtung in Bezug auf Funktionsgewährleistung, mechanische Festigkeit, Alterungsbeständigkeit, Verwendung bei Feuerschutzabschlüssen mit Motorbetrieb und Verhalten im Brandfall haben gezeigt, daß diese Konstrucktionsmerkmale keine ausreichende Lösung zur Erfüllung der Anforderungen im Sinne der Bau- und Prüfgrundsätze für normgerechte Konstruktionen darstellen oder zumindest erkennen lassen.

Im wesentlichen ist dieser der Fall:

a) Weil die bekannten Vorrichtungen zum Trennen von Schienen bei transportanlagen so aufgebaut sind, daß sich der Drehpunkt für das herausschwenkbare teilstück auf der gleichen Seite, auf der das Teilstück der Transportanlage ausschwenkt, und auch noch gleichzeitig innerhalb der Leibung der Öffnung in der Brandwand befindet (DE—U—77 33 133).

Wollte man diese Lösung zum Einsatz bei Feuerschutzabschlüssen nach Grundtyp Nr. 2 konzipieren, wird wegen der geometrischen Verhältnisse ein Platzbedarf für die Unterbringung der Schwenkhebel in der Leibung der Öffnung und für die Anordnung der Feuerschutzabschlüsse mittels eines zusätzlichen Abstandsrahmens auf der Brandwand erforderlich, der in der Praxis am Bau niemals vorhanden ist. Weiterhin ist durch den erforderlichen zusätzlichen Abstandsrahmen der Brandschutz des Feuerschutzabschlusses beeinträchtigt.

Hinzu kommt, daß sich dieses Lösungsprinzip überhaupt nicht bei Feuerschutzabschlüssen anwenden läßt, die mit einem Motorantrieb versehen sind, da wegen der beengten Platzverhältnisse in der Leibung der Öffnung keine Antriebsverbindung von bewegbaren Dichtelement des Feuerschutzabschlusses zum Drehpunkt des herausschwenkbaren Teilstückes der Transportanlage geschaffen werden kann. Eine derartige Konstruktion ist in der Praxis nicht durchführbar.

b) Weil bei den bekannten Feuerschutzabschlüssen, bei denen ein Schienenstück auf einer Schiebevorrichtung befestigt ist, und damit parallel verschiebbar aus der Bewegungsbahn des Dichtelementes herausbewegt, wird, die Anforderungen des Brandschutzes im Sinne der Bau- und Prüfgrundsätze für normgerechte Konstrucktionen nicht erfüllt werden. Dies ist deshalb der Fall, da das herausbewegbare Schienenstück mit der Schiebevorrichtung innerhalb der Baueinheit des Feuerschutzabschlusses angeordnet ist. Dadurch ist, nachdem das Schienenstück mit der Schiebevorrichtung aus der Bewegungsbahn des Dichtelementes herausbewegt ist, und seine Parkstellung erreicht hat, die notwendige brandschutztechnisch bedingte Abdichtung vom bewegbaren Dichtelement zur Brandwand und vor allem zum umlaufenden Dichtrahmen des Feuerschutzabschlusses nicht mehr möglich. In Brandprüfungen ergaben sich an diesen Stellen Gasströme, die zum Versagen der Gesamtkonstruktion während des Brandversuches führten.

c) Weil bei den bekannten Feuerschutzabschlüssen, bei denen der Brandschutz nicht durch das Entfernen der Transportschiene herbeigeführt wird, sondern bei denen ein am unteren oder seitlichen Ende des bewegbaren Dichtelementes angeordneter, auch aufschäumbarer Dichtungsstreifen in einen 4—5 mm breiten Schlitz des Bauelementes der durch die Brandwand-Öffnung hindurchgeführten Transportanlage eingreift und somit eine gewisse Abdichtung erzielt werden soll, keine Brandprüfungen positive beenden konnten, da diese konstruktive Ausbildung auch nach dem abgeschlossenen Aufschäumvorgang noch soviel an freiem Durchgang verbleiben läßt, daß Feuer und Rauch ohne weitere Behinderung hindurchtreten konnten. Dieser freie Durchgang entsteht im wesentlichen dadurch, daß die zum Aufschäumen eingesetzten Materialien die Eigenschaft haben, nur in Richtung der Plattendicke aber nicht in Plattenlängs- und Plattenquerrichtung aufzuschäumen. Aber genau dieses Materialverhalten wäre notwendig, um die restlichen freien Durchgänge zu schließen, ein solches Material ist jedoch nicht verfügbar.

Weiterhin kann der nach der Norm geforderte höchstzulässige Temperaturunterschied, der auf der dem Feuer abgekehrten Seite auf der Oberfläche des Dichtstreifens auftritt, auch wenn dieser aufgeschäumt ist, und an den durch die Brandwand hindurchgeführten Bauteilen der Transportanlage nicht eingehalten werden. Schwierigkeiten besonderer Art ergeben sich, wenn in Bauelemente der Transportsysteme stromführende Schienen eingearbeitet sind. Außerdem sind die zum Aufschäumen eingesetzten Materialien nicht alterungsbeständig und werden deshalb von den staatlichen Materialprüfungsämtern als Konstrucktionsdetail nicht zugelassen.

d) Weil bei den bekannten Vorrichtungen, die mittels eines separaten Antriebes ein Teilstück des Förderanlagerprofils auf einer schrägen Ebene aus der Bewegungsbahn des Dichtelementes des Feuerschutzabschlusses herausbewegt werden, grundsätzlich ein separater Antrieb notwendig ist. Dies führt zu einem technischen Mehraufwand, der in der Betriebspraxis höhere Investitionskosten und mehr Störanfälligkeit während des Betriebes der Anlage mit sich bringt.

e) Weil zusammengefaßt gesagt werden kann, daß alle bekannten Forrichtungen zum Herausschwenken von Schienenstücken und alle bekannten Vorrichtungen innerhalb von Feuerschutzabschlüssen zu Dichtzwecken an den durchgehenden Schienenstücken nicht geeignet sind, als Bautiel zur Bildung eines Feuerschutzabschlusses zu dienen.

Als isoliert betrachtetes Bauteil lassen sich jeweils gewisse Lösungen schaffen. Dies ist jedoch nicht ausreichend im Sinne der Gesamtkonstrucktion, denn es kommt bei den Feuerschutzabschlüssen im wesentlichen darauf an, daß alle Bauteile, die zu der Funktionsgewährleistung beitragen, auch im Zusammenwirken untereinander noch alle notwendigen Aufgaben erfüllen können, so wie es zur Schaffung einer normgerechten Konstruktion von Feuerschutzabschlüssen im Sinne der Bau- und Prüfgrundsätze erforderlich ist. Dafür sind die bekannten Vorrichtungen nicht konzipiert und auch nicht gedacht.

Der Erfindung liegt deshalb die Aufgabe zugrunde, eine Vorrichtung verfügbar zu machen, mit der Teile von Bauelementen ortsfester oder mobiler Transportsysteme, die sich in der Bewegungsbahn des Dichtelementes des Feuerschutzabschlusses befinden, auf einfache Art aus dieser Bewegungsbahn entfernt werden können, um damit ein sicheres Verschließen und Abdichten der gesamten lichten Weite von Öffnungen in Wänden und Decken mittels Feuerschutzabschlüssen zu gewährleisten.

Ferner ist es das Ziel der Erfindung, eine für jede Art von Transportsystem verwendbare Vorrichtung zu schaffen, die im Bereich von Feuerschutzabschlüssen jeder Baukonstruktion direkt an diesem oder separat montiert werden kann und weiterhin einfach jedoch sicher ohne hohe Fehlerquote montiert werden kann, einfach und sicher zu transportieren ist, eine ausreichende mechanische Festigkeit bei gleichzeitiger Genauigkeit im Sinne des Transportbetriebes aufweist, damit die zusammen mit einem Motor getriebenen Feuerschutzabschlüsse der Grundtype Nr. 2 betrieblich bedingte Anzahl von Öffnungs- und Schließbewegungen erreicht wird, wobei die Betriebssicherheit der Transportanlage sichergestellt sein muß, ohne daß unverhältnismäßig hoher Wartungsaufwand notwendig ist.

Außerdem ist es Ziel der Aufgabe, eine Vorrichtung zu schaffen, die auch bei Dauerbetrieb weder das Dichtelement des Feuerschutzabschlüsses noch ander Bauteile der Feuerschutzabschlüsse bei einem Zusammenwirken negativ beeinflußt.

Die Aufgabe wird mit der Erfindung dadurch gelöst, daß

— das abgetrennte Teilstück der Transportschiene mindestens auf seiner Stirnseiten abgeschrägt und auf einem mit einer quer zur Förderrichtung verlaufenden Achse oder Welle schwenkbar verbundenen Traghebel befestigt sowie um den Drehpunkt der Achse oder Welle herausschwenkbar ist,

— die erste die Lage des Drehpunktes bestimmende Achse X—X mit einem Abstand (b) auf der der Transportschiene abgekehrten Seite der Transportanlage verläuft,

— die zweite die Lage des Drehpunktes bestimmende Achse Y—Y in einem Abstand (a) von derjenigen Brandwandseite verläuft, auf der der Feuerschutzabschluß aufmontiert ist.

Um eine sicheres Schließen des Feuerschutzabschlusses mittles des bewegbaren Dichtelementes zu gewährleisten, was ganz entscheidend davon abhängt, ob das Teilstück der Transportanlage im Moment der Schließbewegung des bewegbaren Dichtelementes des Feuerschutzabschlusses auch tatsächlich herausschwenkt, wird dieses Herausschwenken z.B. zwangsweise dergestalt vorgenommen, daß

— die Schwenkbewegung des abgetrennten Teilstücks über eine zwangsgeführte und somit zwangsgesteuerte Verbindungseinheit in beiden Richtungen erfolgt, die aus einer auf dem Dichtelement befestigten Führungskurve, einer daran geführten Ablaufrolle, einem Triebhebel und ggf. einem Kegelradpaar besteht, das mit der Welle oder Achse des schwenkbaren Teilstücks verbunden ist, oder

— die Schwenkbewegung des abgetrennten Teilstücks über von dem Dichtelement unabhängige Antriebe wie Kraftspeicher in Form von Zugfedern oder Gegengewichte, oder Bewegungselemente in Form eines elektrischen Hubmagnets, eines pneumatischen oder hydraulischen Stellzylinders, eines mit der Achse oder Welle fest oder mittels einer Kupplung verbundenen Drehmagnets oder Elektromotors mit aufgesetztem Untersetzungsgetriebe erfolgt.

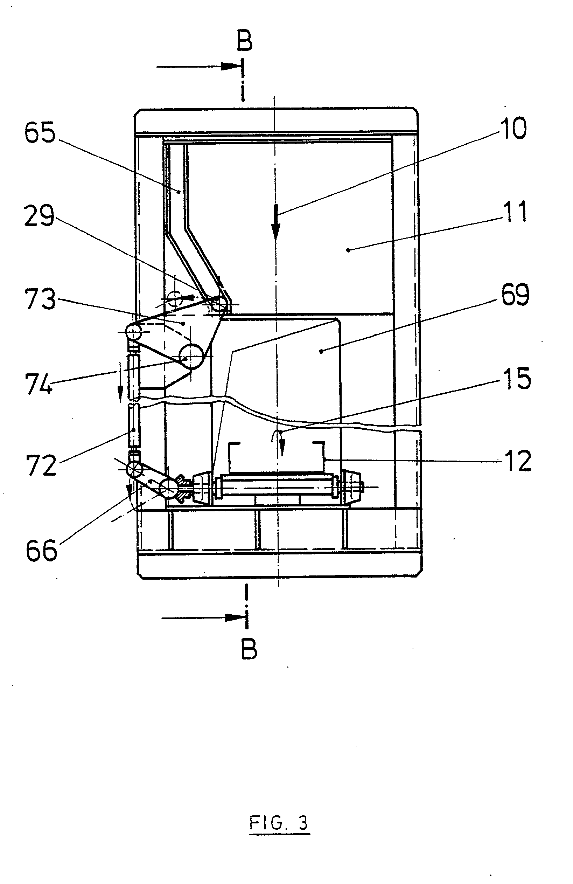

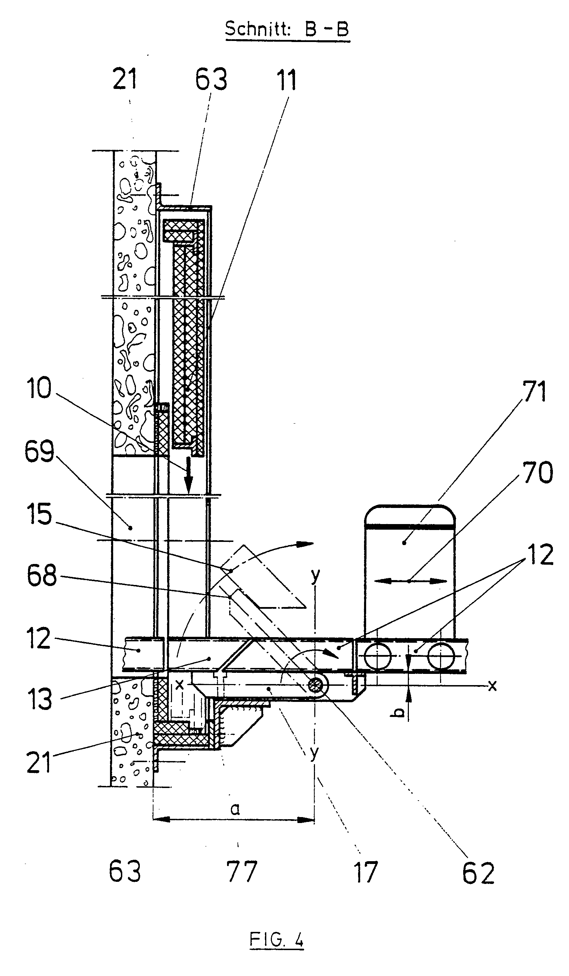

Eine weitere Ausgestaltung der Erfindung zeigt, daß das bewegbare Dichtelement des Feuerschutzabschlusses auch dann als Antrieb für die erforderliche Schwenkbewegung benutzt werden kann, wenn das bewegbare Dichtelement senkrecht zum Verlauf der Transportanlage schließt (Fig. 3+4), wobei am Triebhebel eine verstellbare Verbindungsstange mit einem um einen Drehpunkt schwenkbaren Verbindungshebel verbunden ist, und daß die Ablaufrolle, die in der Führungskurve abrollt, auf der gegenüberliegenden Seite befestigt wird.

Damit bei geöffnetem Feuerschutzabschluß und somit eingeschwenktem Teilstück ein normaler Betriebsablauf der Transport-/Förderanlage erfolgen kann, zeigt eine weitere Ausgestaltung der Erfindung eine formschlüssige Verriegelung des herausschwenkbaren Teilstückes über eine Nocke mit Nockenhebel, die über eine Verbindungsstange mit einem Kipphebel verbunden ist, der in den auf dem Teilstück angebrachten Kopfbolzen einrastet.

Mit der so geschaffenen Erfindung wird erreicht, daß eine Vorrichtung zum Abdichten und Schließen von Feuerschutzabschlüssen für Öffnungen in Wänden und Decken bei durch Transportanlagen verbundenen Räumen, mittels Herausschwenken eines Teilstückes der Transportanlagenbauteile verfügbar wird, mit der Teile von Bauelementen ortsfester und mobiler Transportsysteme, die sich in der Bewegungsbahn des Dichtelementes des Feuerschutzabschlusses befinden, aus dieser Bewegungsbahn entfernt werden können, um damit ein sicheres Verschließen und Abdichten der gesamten lichten Weite von Öffnungen in Wänden und Decken mittels Feuerschutzabschlüssen zu gewährleisten.

Ferner wird mit der Erfindung erreicht, daß eine für jede Art von Transportsystem verwendbare Vorrichtung verfügbar wird, die im Bereich von Feuerschutzabschlüssen jeder Baukonstruktion direkt an diesem oder separat montiert wird und weiterhin einfach jedoch sicher, ohne hohe Fehlerquote, montiert werden kann, sowie einfach und sicher zu transportieren ist.

Desweiteren wird mit der geschaffenen Erfindung erreicht, daß die Vorrichtung eine ausreichende, mechanische Festigkeit bei gleichzeitiger Genauigkeit in Bezug auf die Transportanlage aufweist, damit die zusammen mit einem motorgetriebenen Feuerschutzabschluß der Grundtype Nr. 2 betrieblich bedingte Anzahl von Öffnungs- und Schließbewegungen erreicht wird, wobei die Betriebssicherheit der Transportanlage sichergestellt sein muß, ohne daß unverhältnismäßige Wartung notwendig ist.

Weiterhin ist die so geschaffene Vorrichtung dazu geeignet, daß als Antrieb für die Schwenkbewegung sowohl ein Bauelement, wie es in der DE—A—28 15 515 näher beschrieben ist, oder auch über eine Verbindungseinheit das bewegbare Dichtelement des Feuerschutzabschlusses verwendet werden kann.

Außerdem wird mit der so geschaffenen Erfindung erreicht, daß eine Vorrichtung verfügbar wird, die im besonderen dazu geeignet ist, als Baueinheit in der Konstruktion von Feuerschutzabschlüssen integriert zu werden, wie sie unter der EP—A—3 6 14 beschrieben ist und von dem bewegbaren Dichtelement dieser Feuerschutzabschlüsse angetrieben werden, wobei die Konstruktion der Vorrichtung so ausgebildet ist, daß auch bei Dauerbetrieb weder das Dichtelement des Feuerschutzabschlusses noch andere Bauteile des Feuerschutzabschlusses bei einem Zusammenwirken negativ beeinflußt werden.

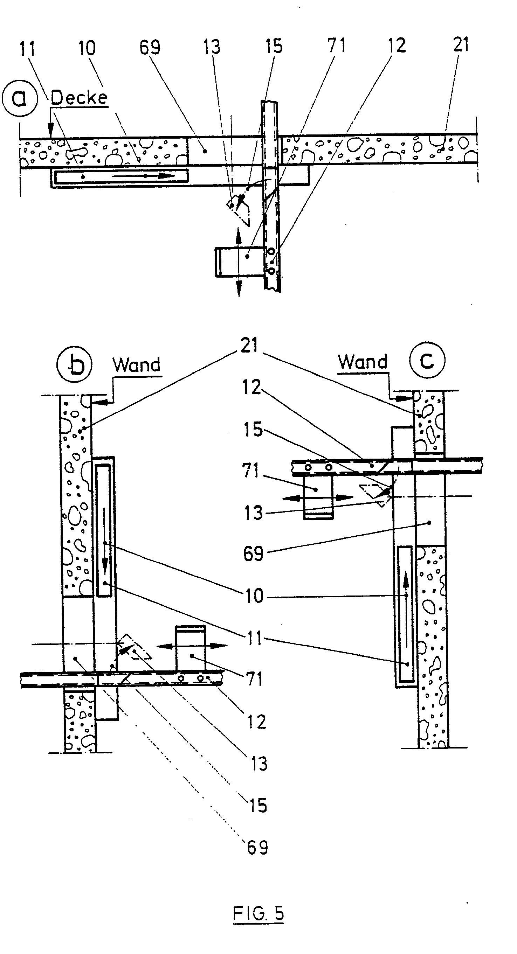

Weiterhin wird mit der so geschaffenen Erfindung erreicht, daß die erfindungsgemäße Vorrichtung so ausgestaltet ist, daß ein Ausschwenken eines Teilstückes der Transportschienen in jeder der in der Beschreibung der Zeichnung nach Fig. 5 aufgeführten Arbeitslage des Feuerschutzabschlusses möglich ist.

Weiterhin wird mit der so geschaffenen Erfindung erreicht, daß den in der Arbeitslage a+c nach Fig. 5 auftretenden Querkräften, die beim Überfahren des herausschwenkbaren Teilstückes der Transportanlage durch den Förderwagen versuchen, das Teilstück aus der Flucht zu ziehen, entgegenzuwirken.

Die Erfindung ist nachfolgend unter der Angabe von weiteren, genauer definierten Merkmalen und Vorteilen als Ausführungsbeispiel gemäß der Zeichnungen beschrieben:

Dabei zeigt:

Fig. 1 Ein Ausführungsbeispiel in der Teilansicht eines an der Brandwand aufmontierten Feuerschutzabschlusses, die Transportschiene (12) ist dabei geschnitten, Schließrichtung des bewegbaren Dichtelementes waagerecht zum Verlauf der Transportschiene.

Fig. 2 Einen Schnitt durch Fig. 1 entlang der Linie A—A, die Transportschiene (12) wird in der Ansicht sichtbar.

Fig. 3 Ein Ausführungsbeispiel in der Teilansicht eines an der Brandwand aufmontierten Feuerschutzabschlusses, die Transportschiene (12) ist dabei geschnitten, Schließrichtung des bewegbaren Dichtelementes senkrecht zum Verlauf der Transportschiene.

Fig. 4 Einen Schnitt durch Fig. 3 entlang der Linie B—B, die Transportschiene (12) wird in der Ansicht sichtbar.

Fig. 5 Eine schematische Darstellung der Arbeitsweise von Feuerschutzabschlüssen, wie sie in der Betriebspraxis vorkommen.

Fig. 6 Ein Ausführungsbeispiel in der Ansicht einer erfindungsgemäßen Vorrichtung zum Anbau an den äußeren Tragrahmen des Feuerschutzabschlusses oder direkt an ein Bauteil der Transportschiene, mit außerhalb der Trennschnitte angeordnetem Drehpunkt.

Fig. 7 Ein weiters Ausführungsbeispiel nach Fig. 1, jedoch in einer Weiterbildung der Betätigungselemente.

Fig. 8 Einen Schnitt durch Fig. 6, entlang der Linie A—A.

Fig. 9 Ein weiteres Ausführungsbeispiel als Schnitt durch Fig. 7, entland der Linie A—A, in einer Weiterbildung der Betätigungselemente.

Fig. 10 Ein weiteres Ausführungsbeispiel nach Fig. 1, jedoch mit innerhalb der Trennschnitte angeordnetem Drehpunkt.

Fig. 11 Ein Ausführungsbeispiel in der Teilansicht im Schnitt eines Feuerschutzabschlusses mit der aufmontierten erfindungsgemäßen Vorrichtung mit zusätzlich aufgesetzter Verriegelung des Teilstückes (13), Schließrichtung des bewegbaren Dichtelementes senkrecht zum Verlauf der Transportschiene.

Fig. 12 Ein Ausführungsbeispiel in der Teilansicht eines Feuerschutzabschlusses, die Transportschiene (12) ist dabei geschnitten, mit der aufmontierten erfindungsgemäßen Vorrichtung mit zusätzlich aufgesetzter Verriegelung des Teilstückes (13), Schließrichtung des bewegbaren Dichtelementes waagerecht zum Verlauf der Transportschiene.

Benennung der Einzelteile
Teil Nr. 10 = Bewegungsbahn des Dichtelementes (11)
Teil Nr. 11 = Dichtelement
Teil Nr. 12 = Transportschiene
Teil Nr. 13 = Teilstück abgetrennt, schwenkbar
Teil Nr. 13a = Ruhestellung des Teilstücks (13)
Teil Nr. 14 = Achse/Welle, schwenkbar, drehbar
Teil Nr. 15 = Schwenkbewegung des schwenkbaren Teilstückes (13)
Teil Nr. 16 = Tragrahmen für Teilstück (13)
Teil Nr. 16a = Befestigungsmittel, z.B. Schrauben
Teil Nr. 17 = Traghebel für Teilstück (13)
Teil Nr. 18 = Lagerbock
Teil Nr. 19 = Rahmen Feuerschutzabschluß
Teil Nr. 20 = Feuerschutzabschluß
Teil Nr. 21 = Brandwand
Teil Nr. 22 = Zugfeder als Kraftspeicher
Teil Nr. 23 = Hebel
Teil Nr. 24 = Festpunkt
Teil Nr. 25 = Gegengewicht als Kraftspeicher
Teil Nr. 26 = Bewegungselement
Teil Nr. 26a = Bewegliches Lager
Teil Nr. 27 = Drehmagnet
Teil Nr. 28 = Triebhebel
Teil Nr. 29 = kugelgelagerte Ablaufrolle
Teil Nr. 30 = Tragrahmen
Teil Nr. 31 = Abrollbügel
Teil Nr. 32 = Abrollbahn bzw. Führungskurve
Teil Nr. 33 = Bremszylinder
Teil Nr. 34 = Rückholfeder
Teil Nr. 35 = Durchlaßventil
Teil Nr. 36 = Gegenplatte für Haftmagnet
Teil Nr. 37 = Haftmagnet
Teil Nr. 38 = elektro-magnetische Kupplung
Teil Nr. 39 = Befestigung
Teil Nr. 40 = Triebhebel
Teil Nr. 41 = kugelgelagerte Ablaufrolle
Teil Nr. 42 = Blechprofil
Teil Nr. 43 = Abrollbahn bzw. Führungskurve
Teil Nr. 44 = Befestigung
Teil Nr. 45 = Elektro-Motor
Teil Nr. 46 = Untersetzungsgetriebe
Teil Nr. 47 = Achse/Welle, drehbar
Teil Nr. 48 = Tragrahmen

Teil Nr. 49 = Teilstück, abgetrennt, schwenkbar
Teil Nr. 50 = Bauteile Transportanlage
Teil Nr. 51 = Trennschnitte
Teil Nr. 52 = stromführende Schienen
Teil Nr. 53 = Nut
Teil Nr. 54 = Feder
Teil Nr. 55 = elastische Spange
Teil Nr. 56 = gewollte Gradzahl
Teil Nr. 57 = gewollte Endstellung
Teil Nr. 58 = Doppelbügel
Teil Nr. 59 = Führungsbahn
Teil Nr. 60 = Doppelbügel
Teil Nr. 61 = Führungsbahn
Teil Nr. 62 = Drehpunkt Welle (14)
Teil Nr. 63 = Feuerschutzabschluß
Teil Nr. 64 = Verbindungseinheit zwischen Dicht element (11) und Welle (14)
Teil Nr. 65 = Führungskurve
Teil Nr. 66 = Triebhebel
Teil Nr. 67 = Kegelradpaar
Teil Nr. 68 = Herausgeschwenkte Stellung von Teilstück (13)
Teil Nr. 69 = Öffnung in der Brandwand
Teil Nr. 70 = Transportrichtung
Teil Nr. 71 = Transportgut
Teil Nr. 72 = Längenverstellbare Verbindungsstange
Teil Nr. 73 = Verbindungshebel
Teil Nr. 74 = Drehpunkt
Teil Nr. 75 = Lagergehäuse
Teil Nr. 76 = Lagerbock
Teil Nr. 77 = Befestigung Lagerbock am Feuerschutzabschluß (63)
Teil Nr. 78 = Riegelhebel
Teil Nr. 79 = Kopfbolzen
Teil Nr. 80 = Kipphebel
Teil Nr. 81 = Verbindungsstange
Teil Nr. 82 = Nockenhebel
Teil Nr. 83 = Nocke
Teil Nr. 84 = Anlaufrolle
Teil Nr. 85 = Zugfeder
Teil Nr. 86 = Anschlag
Teil Nr. 87 = Kugelgelenk
Teil Nr. 88 = Drehpunkt
Teil Nr. 89 = Drehpunkt
Teil Nr. 90 = Lagerbock unten
Teil Nr. 91 = Lagerbock oben
Teil Nr. 92 = Flaches Auflager von Riegelhebel (78)
Teil Nr. 93 = Konischer Kopf von Bolzen (79)
Teil Nr. 94 = Last Fördergut—Transportgut
Teil Nr. 95 = Bewegungsrichtung
Teil Nr. 96 = Bewegungsrichtung
Teil Nr. 97 = Welle

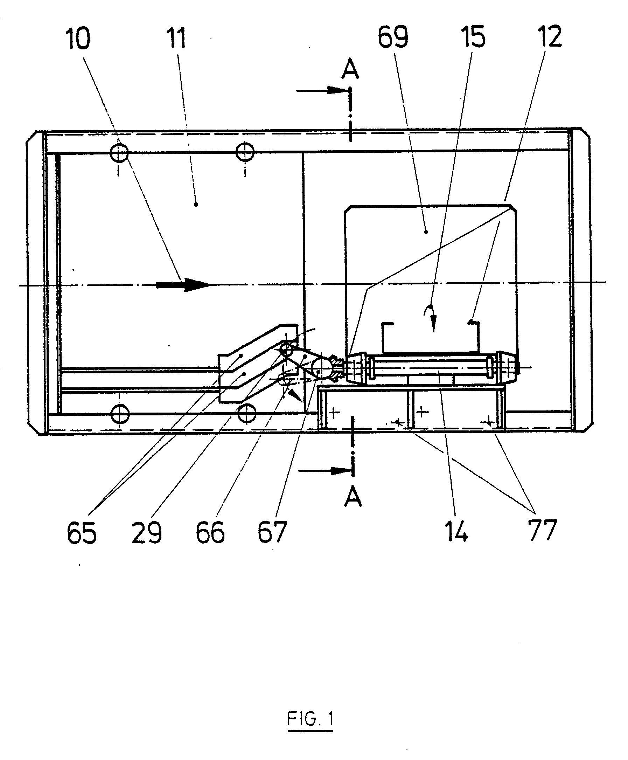

Wie Fig. 1 zeigt, steht das bewegbare Dichtelement (11) in der Bereitschaftsstellung links neben der zu verschließenden Öffnung (69) an der Brandwand (21). Wird das bewegbare Dichtelement (11) auf der Bewegungsbahn (10) aus seiner Bereitschaftsstellung heraus vor die zu verschließende Öffnung (69) bewegt, dann wird das Teilstück (13) der Transportanlage (12) über die zwangsgeführte und zwangsgesteuerte Verbindungseinheit, bestehend aus der Führungskurve (65), die fest auf dem bewegbaren Dichtelement (11) angebracht ist, der Ablaufrolle (29), dem Triebhebel (66) und dem Kegelradpaar (67), auf der Kreisbahn (15) herausgeschwenkt.

Damit ist eine Vorrichtung geschaffen, bei der das bewegbare Dichtelement (11) des Feuerschutzabschlusses als Antrieb für die Schwenkbewegung des Transportanlagenteilstückes (13) eingesetzt wird.

Fig. 1 zeigt die Lösung für den Fall, wenn das bewegbare Dichtelement (11) von der Seite, also quer zur Laufrichtung der Transportanlage (12), in den Schienenbereich der Transportanlage (12) einfährt.

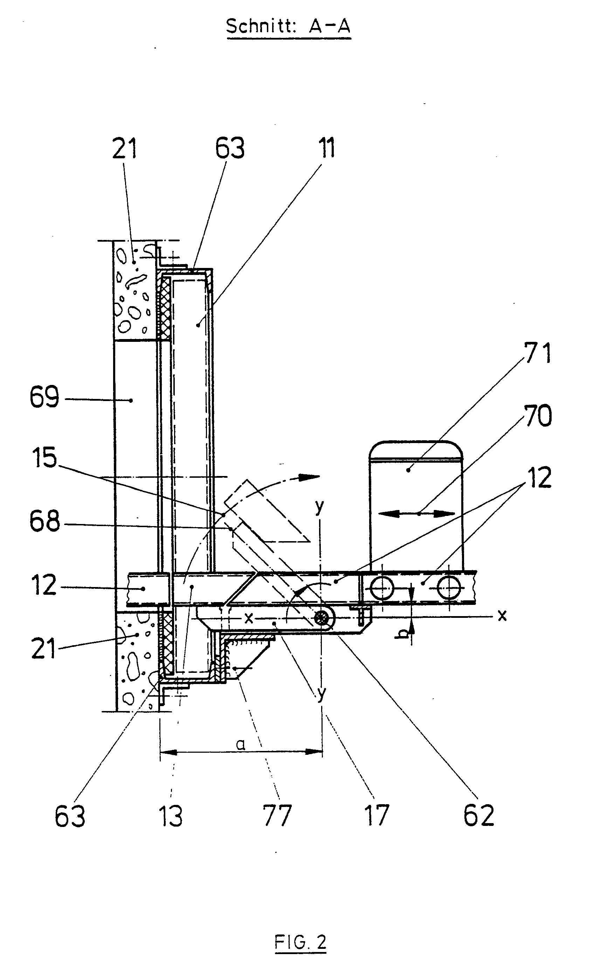

Fig. 2 zeigt in dem Schnitt A—A durch Fig. 1 die Bewegungsverhältnisse von bewegbarem Dichtelement (11) und herausschwenkbarem Teilstück (13) der Transportanlage (12).

Im eingeschwenkten Zustand des Teilstückes (13) ist einwandfreier Transportbetrieb mittels des Transportoder Fördergutes (71) möglich. Schließt der Feuerschutzabschluß mittels des bewegbaren Dichtelementes (11) die Öffnung (69) ab, so befindet sich das Teilstück (13) der Transportanlage (12) in der gestrichelten Position. Förderbetrieb ist dann nicht mehr möglich. Die Bewegungsbahn (10) des sich schließenden bewegbaren Dichtelementes (11) ist somit über die gesamte Dicke des bewegbaren Dichtelementes (11) frei. Um günstige geometrische Bedingungen zu schaffen, die einerseits ein leichtes Herausschwenken des Teilstückes (13) ohne besondere Kraftaufwendung ermöglichen, und andererseits verschließfreien Förderbetrieb im eingeschwenkten Zustand zu gewährleisten, ist es wichtig, daß folgende Bedingungen erfüllt sind:

1) Das Teilstück (13) ist auf der Vorderseite gerade und auf der Rückseite (dem Drehpunkt (62) zugewendet) um 45° schräg eingeschnitten.
2) Die den Drehpunkt (62) bestimmende X- und Y-Achse ist wie zeichnerisch durch die Maße (a) und (b) definiert. Es ist dabei von großer Bedeutung, daß die den Drehpunkt (62) bestimmende X-Achse mit dem Abstand (b) unterhalb der Förderschiene (12) und die Y-Achse mit dem Abstand (a) von derjenigen Brandwandseite entfernt, auf der der Feuerschutzabschluß aufmontiert ist, verläuft.

Fig. 3 zeigt ein Ausführungsbeispiel, bei dem das bewegbare Dichtelement (11) senkrecht zum Verlauf der Transportanlagenschiene (12) auf der Bewegungsbahn (10) vor die zu verschließende Öffnung (69) bewegt wird. Auf dem bewegbaren Dichtelement (11) ist die Führungskurve (65) angebracht, in der die Ablaufrolle (29) abrollt. Die Ablaufrolle (29) ist auf dem im Drehpunkt (74) gelagerten Verbindungshebel (73) fest verbunden. An der der Ablaufrolle (29) gegenüberliegenden Seite ist mittels eines Kugelkopfes die längenverstellbare Verbindungsstange (72) angebracht und mit dem Triebhebel (66) verbunden. Über den Triebhebel (66) und das Kegelradpaar (67), die gemeinsam die Verbindungseinheit (64) bilden, wird die Welle (14) mit dem Drehpunkt (62) angetrieben. Somit wurde eine Antriebseinheit geschaffen, wie unter Fig. 1 bereits beschrieben, bei der das bewegbare Dichtelement (11) als Antrieb für den herausschwenkbaren Teil (13) der Transportanlage (12) benutzt wird. Die längenverstellbare Verbindungsstange (72) hat an einem Ende Links- und am anderen Ende Rechtsgewinde, so daß damit Maßungenauigkeiten durch Verschleißerscheinungen im Antriebssystem nachjustiert werden können, was für den einwandfreien Transportbetrieb im Normalfall und für einwandfreies Schließen im Brandfall außerordentlich wichtig ist.

Fig. 4 zeigt in einem Schnitt entlang der Linie B—B durch Fig. 3 die Bewegungsverhältnisse. Im eingeschwenkten Zustand des Teilstückes (13) in die Transportanlage (12) ist mittels der Transporteinrichtung (71) Transportbetrieb in den Richtungen (70) möglich. Im herausgeschwenkten Zustand des Teilstückes (13) ist der Bereich für das bewegbare Dichtelement (11) in der vollen Breite des bewegbaren Dichtelementes (11) frei. Es kann somit ungehindert die Öffnung (69) in der Brandwand (21) mittels dem bewegbaren Dichtelement (11) überlappend und in der gewollten Dicke verschlossen werden.

Fig. 5 zeigt die verschiedenen Betriebszustände, wie sie in der Betriebspraxis vorkommen. Detail a) zeigt die Einbausituation eines Feuerschutzabschlusses mit der erfindungsgemäßen Vorrichtung zum Herausschwenken aufmontiert unter einer Decke. Das Bild zeigt das Einfahren des bewegbaren Dichtelementes (11) senkrecht zum Verlauf der Transportanlagenbauteile (12). In einer nicht dargestellten Form kan das bewegbare Dichtelement (11) auch quer d.h. von der Seite zum Verlauf der Transportanlagenbauteile (12) einfahren.

Detail b) zeigt den Einsatzfall bei stehender Fahrt, aufmontiert auf der Brandwand. Das bewegbare Dichtelement (11) fährt dabei von oben nach unten in den Bereich vor die Brandwandöffnung (69) wobei das schwenkbare Bauteil (13) in entgegengesetzter Weise aus dem Schließbereich des bewegbaren Dichtelementes (11) herausschwenkt. In einer nicht dargestellten Form kann das bewegbare Dichtelement (11) auch quer d.h. von der Seite in den Schienenbereich einfahren.

Detail c) zeigt einen Einsatzfall, bei dem das bewegbare Dichtelement (11) von unten nach oben vor die zu verschließende Brandwandöffnung (69) bewegt wird. Dieser Anwendungsfall kommt vor bei Transportanlagen mit hängender Fahrt. Für diesen Anwendungsfall ist das längenverstellbare Verbindungsgestänge (72) von besonderer Wichtigkeit, da die Kräfte des Transportgutes (71) über die Verbindungseinheit (64) auf das bewegbare Dichtelement (11) des Feuerschutzabschlusses einwirken. In einer nicht gezeigten Ausführungsform kann das bewegbare Dichtelement (11) auch quer zum Verlauf der Transportanlagenbauteile (12) in den Schienenbereich einfahren.

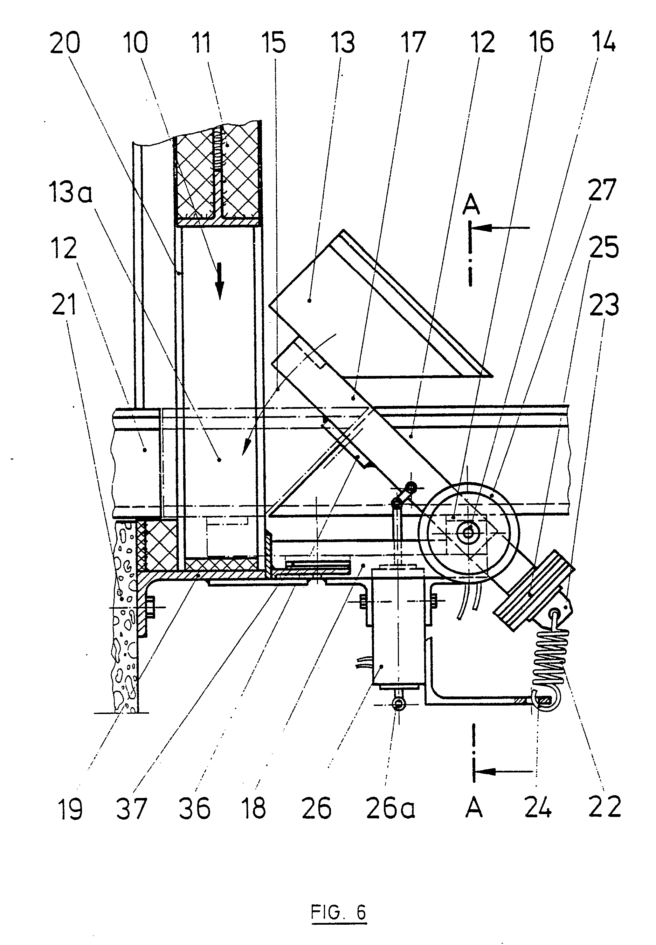

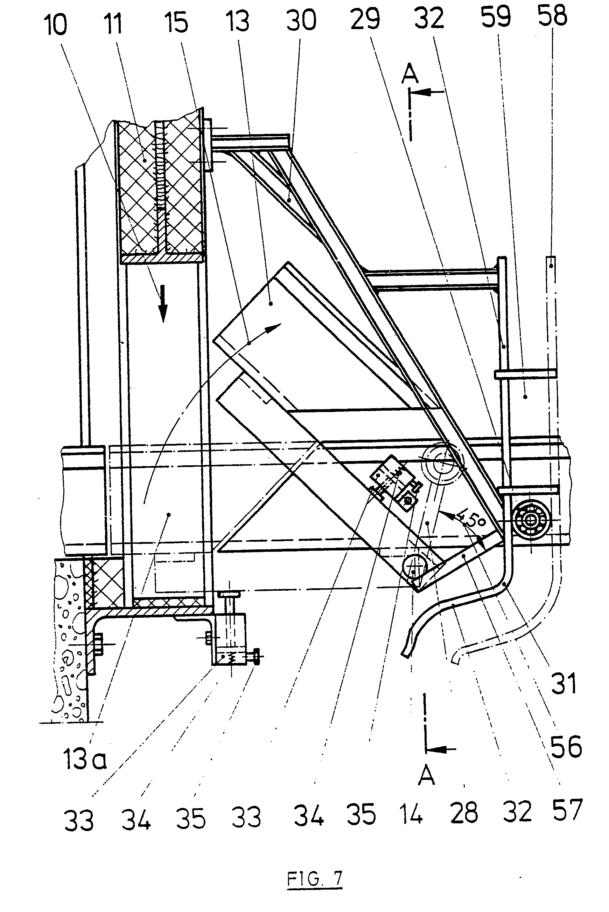

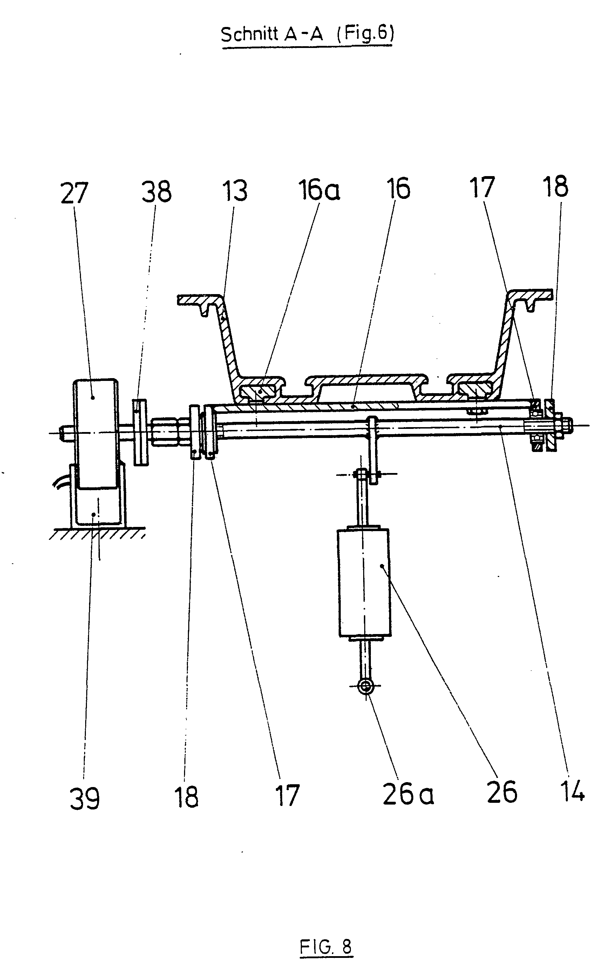

Wie Fig. 6 zeigt, besteht die erfindungsgemäße Vorrichtung im wesentlichen aus einem Tragrahmen als Unterkonstruktion (16), in dem das abgetrennte Teilstück (13) der Transportanlage (12) über einen Traghebel (17) mittels einer drehbaren Welle und/oder Achse (14) schwenkbare gelagert ist.

Die so geschaffene Ausschwenkvorrichtung kann mittels Schrauben oder anderer bekannten Befestigungsmittel (16a) direkt auf dem feststehenden Ende des Bauteils der Transportanlage (12) befestigt werden. Eine weitere Befestigungsmöglichkeit besteht darin, die gesamte Ausschwenkvorrichtung mit einem Lagerbock (18) auf dem äußeren Rahmen (19) des Feuerschutzabschlusses (20) oder direkt an der Wand und/oder Decke (21) zu befestigen. Im rechten Teil der Fig. 6 ist als Kraftspeicher eine Zugfeder (22) dargestellt, die an über die Welle (14) überstehenden Hebelarm (23) und an einem Festpunkt (24) befestigt ist. Auf dem gleichen überstehenden Hebel (23) ist ein abgewandeltes Ausführungsbeispiel dargestellt, bei dem als Kraftspeicher ein vorbestimmtes Gegengewicht (25) dient. Das schwenkbare, abgetrennte Teilstück (13) wird, wie auch das Dichtelement (11), in seiner Ruhestellung (13a) Transportbetrieb) von einem beweglich gelagerten (26a) Bewegungselement (26) gehalten. Dieses Bewegungselement (26) kann als Hydraulikzylinder, als pneumatischer Zylinder oder als elektrischer Hubmagnet ausgebildet sein, und wird im Brandfall durch (nicht dargestellte) Rauch- und/oder Temperaturfühler über eine geeignete Steuerschaltung zusammen, aber zeitverzögert, mit dem Dichtelement (11) ausgelöst. Anstatt das Bewegungselementes (26) kann die Bewegung des Teilstückes (13) auch durch einen mit der Welle (14) fest oder mittels Kupplung verbundenen elektrischen Drehmagnet (27) erfolgen.

Die Vorrichtung nach der Erfindung dient zum Abdichten und Verschließen von Öffnungen mit Feuerschutzabschlüssen auf einer Brandwand (21) durch Herausschwenken eines Teilstückes (13) der Transportanlage (12) aus der Bewegungsbahn (10) des zu einem Feuerschutzabschluß gehörenden Dichtelement (11).

Bei dem Ausführungsbeispiel nach Fig. 6 ist noch eine weitere mögliche Besonderheit dargestellt, derzufolge an der Unterseite des schwenkbaren Teilstückes (13) die Haftmagnetengegenplatte (36) angebracht ist. Diese liegt bei eingeschwenktem Teilstück (13a) auf der Magnetfläche des am äußeren Tragrahmen (19) des Feuerschutzabschlusses (20) angebrachten Haftmagneten (37) auf. Der Haftmagnet (37) wird im Brandfall durch (nicht dargestellte) Rauch- und/oder Temperaturfühler über eine geeignete Steuerschaltung, zusammen, aber zeitverzögert, mit dem Dichtungselement (11) ausgelöst.

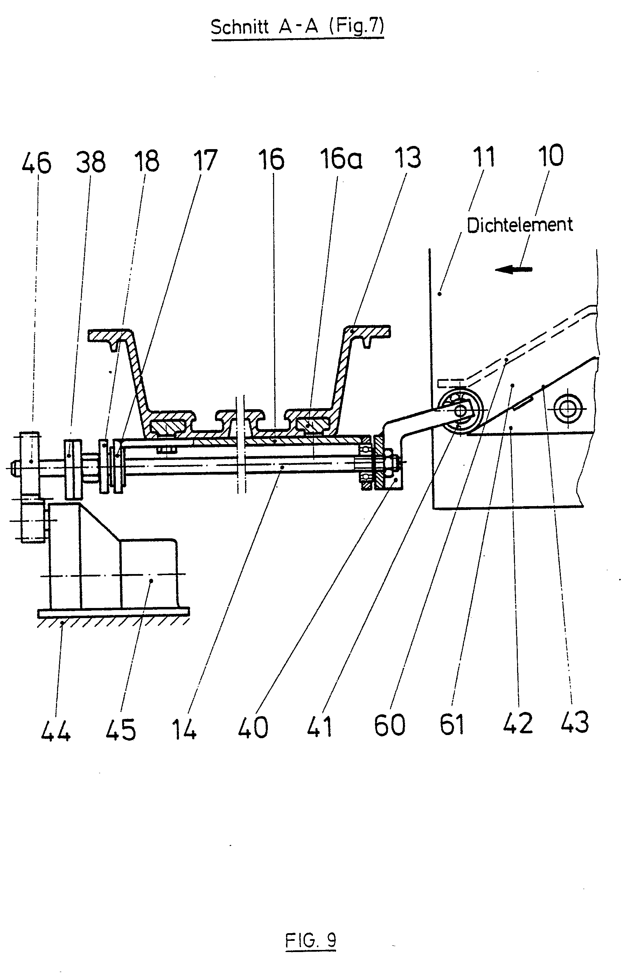

Bei dem in Fig. 7 dargestellten Ausführungsbeispiel dient als Bewegungselement ein Hebel (28), der mit der Welle (14) des schwenkbaren Teilstückes (13) fest verbunden ist. Am oberen Ende des Hebels (28) ist eine kugelgelagerte Rolle (29) angeordnet. Am Dichtelement (11) ist der Tragrahmen (30) befestigt, an dessen rechtem Ende der Bügel (31) angeordnet ist, der in seiner vorbestimmten geometrischen Form und Anordnung als Abrollbahn (32) für die Rolle (29) ausgearbeitet ist.

In einer weiteren Ausgestaltung dieses Ausführungsbeispieles gemäß Fig. 7 kann der Bügel (31) als Doppelbügel (58) ausgebildet sein, so daß die Bewegungsbahn (59) gebildet wird, in der die Rolle (29) zwangsgeführt wird.

Der Doppelbügel (58) kann verstellbar ausgebildet sein.

Diese Ausführungsart kann immer dann zur Anwendung kommen, wenn die Bewegungsbahn des Dichtelementes des Feuerschutzabschlusses senkrecht zur Transportrichtung verläuft.

Um ein erschütterungs- und geräuscharmes Anfahren der jeweiligen Endstellung zu gewährleisten ist es vorteilhaft, aufschlagdämpfende Bremszylinder (33) vorzusehen.

Vorzugsweise handelt es sich hierbei um pneumatische Druckzylinder mit Rückholfeder (34). Die Bremsverzögerung wird mit Hilfe eines verstellbaren Durchlaßventils (35) bestimmt.

In der Schnittdarstellung gemäß Fig. 8 sind die vorstehenden Einzelheiten der erfindungsgemäßen Vorrichtung deutlich ersichtlich.

In einer Weiterbildung ist der selbsttragend befestigte (39) Drehmagnet (27) über eine elektromagnetische Kupplung (38) mit der Welle (14) verbunden. Diese elektromagnetische Kupplung (38) wird im Brandfall über eine geeignete Steuerschaltung zusammen mit dem Drehmagnet (27) ausgelöst.

In der Schnittdarstellung gemäß Fig. 9 dient als Bewegungselement ein Hebel (40) der mit der Welle (14) oder dem Tragrahmen (16) des schwenkbaren Teilstückes (13) fest verbunden ist.

Am seitlichen Ende des Hebels (40) ist eine kugelgelagerte Rolle (41) angeordnet. Am Dichtelement (11), dessen Bewegungsbahn quer zur Richtung der Transportanlage veläuft, ist ein Blechprofil (42) befestigt, das in seiner vorbestimmten geometrischen Form und Anordnung als Abrollbahn (43) für die Rolle (41) ausgearbeitet ist.

Wie eine weitere Ausgestaltung eines Ausführungsbeispieles in Fig. 9 zeigt, kann als Bewegungselement auch ein selbsttragend befestigter (44) Elektromotor (45) mit aufgestecktem Getriebe (46) mit der Welle (14) fest oder über eine Kupplung (38) verbunden sein.

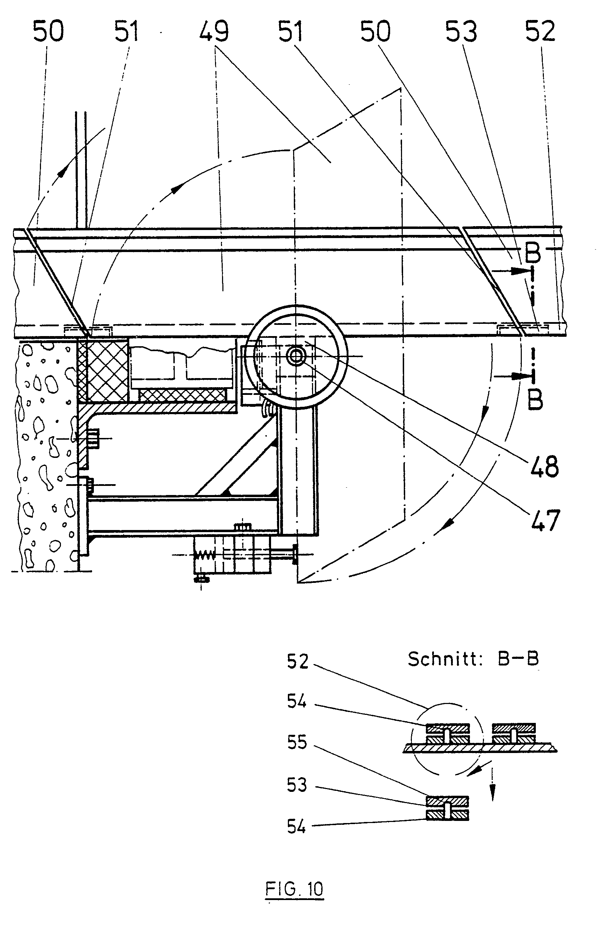

In Fig. 10 ist ein abgewandeltes Ausführungsbeispiel dargestellt, bei dem die drehbare Achse/Welle (47), welche über den Tragrahmen (48) mit dem abgetrennten Teilstück (49) der Transportanlage (50) verbunden ist, zwischen den Trennschnitten (51) angeordnet ist. Bei diesem Ausführungsbeispiel der Erfindung sind alle Weiterbildungen und Zusatzeinrichtungen, wie in den Fig. 6, 7, 8 und 9 dargestellt und vor beschrieben, verwendbar.

Im rechten Teil der Fig. 10 ist eine weiter besondere Möglichkeit dargestellt, derzufolge die stromführenden Schienen (52) an den Trennschnitten (51) als Nut- (53) und Feder- (54)-Verbindung und mit einer elastischen Spange (55) ausgestattet sind.

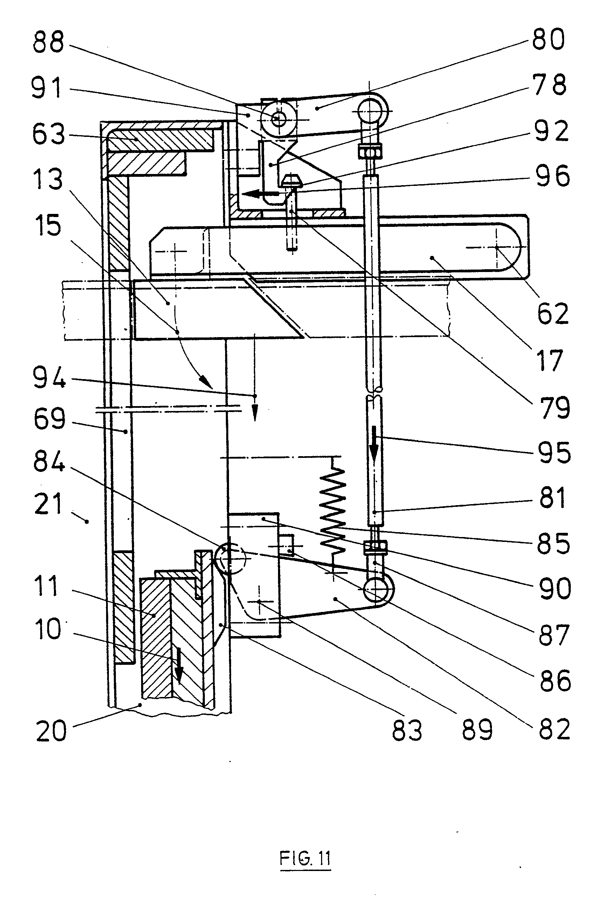

Wie Fig. 11 zeigt, steht das bewegbare Dichtelement (11) des Feuerschutzabschlusses (20) in der Bereitschaftsstellung neben der zu verschließenden Öffnung (69) an der Brandwand (21). Die gezeichnete Stellung zeigt den Förderbetriebszustand bei eingeschwenktem Teilstück (13). Wird das bewegbare Dichtelement (11) auf der Bewegungsbahn (10) aus seiner Bereitschaftsstellung heraus in Richtung vor die zu verschließende Öffnung (69) bewegt, dann wird von der auf dem bewegbaren Dichtelement (11) fest angebrachten Nocke (83) über die Anfahrrolle (84) über den Drehpunkt (89) auf dem Lagerbock (90) der schwenkbare Nockenhebel (82) bewegt. Die nachstellbare Verbindungsstange (81), die mit dem Kipphebel (80) und dem Nockenhebel (82) über die Kugelgelenke (87) formschlüssig verbunden ist, führt dabei die Bewegungsrichtung (95) aus. Die im Drehpunkt (88) drehbar gelagerte Welle/Achse ist wiederum mit dem Kipphebel (80) und dem Riegelhebel (78) fest verbunden, wodurch die Bewegungsrichtung (96) ausgeführt wird. Damit wird der Bolzen (79) freigegeben bzw. entriegelt und somit kann der Funktionsablauf wie unter Fig. 1 beschrieben fortgesetzt werden. Von entscheidender Bedeutung ist hierbei, daß vom Zeitablauf her gesehen zuerst der Entriegelungsvorgang für den Bolzen (79) abgeschlossen sein muß, bevor der Bewegungsablauf nach Fig. 1 beginnt.

In der Fig. 11 ist der verriegelte Zustand des Bolzen (79) gezeichnet. Dabei ist der Riegelhebel (78) an seinem unteren Ende als Haken mit einem flachen Auflager (92) ausgebildet, auf dem der mit einem konischen Kopf (93) ausgebildete Bolzen (79) aufliegt. Die durch das Fördergut/Transportgut entstehende Last (94) kann somit das herausschwenkbare Teilstück (13) nicht aus der Flucht in Richtung (15) ziehen, wodurch einwandfreier Förderbetrieb auch mit schweren Lasten Möglich ist.

Die Feder (85) dient als Kraftspeicher und bewirkt einwandfreies Verriegeln.

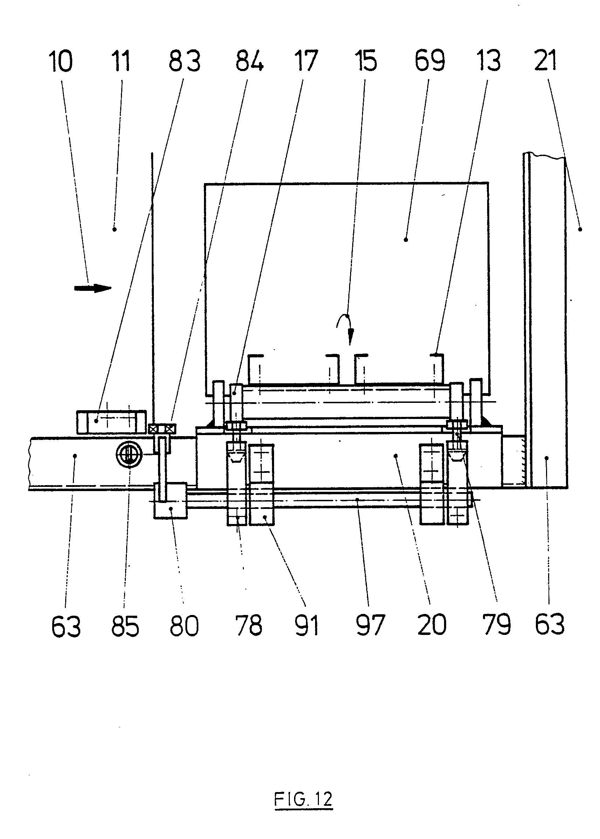

Wie Fig. 12 zeigt, steht das bewegbare Dichtelement (11) des Feuerschutzabschlusses (20) in Bereitschaftsstellung neben der zu verschließenden Öffnung (69) an der Brandwand (21), jedoch verläuft hier die Bewegungsrichtung (10) des Dichtelementes (11) quer zum Verlauf der Förderschienen (13). Wird das bewegbare Dichtelement (11) auf der Bewegungsbahn (10) aus seiner Bereitschaftsstellung heraus in Richtung vor die zu verschließende Öffnung (69) bewegt, dann wird von der Nocke (83) über die Anfahrrolle (84) direkt über die Welle (97) der Riegelhebel (78) bewegt. Ansonsten gilt hier der gleiche Bewegungsablauf wie unter Fig. 11 beschrieben.

Wie aus der Beschreibung und aus den Zeichnungen ersichtlich ist, können die verschiedenen Vorrichtungen als einzelne, unabhängige Montageeinheiten aufgebaut sein, die sich auf dem Feuerschutzabschluß in Verbindung mit der bereits vormontierten Transportanlage in einfacher Weise anbringen lassen.

Die Erfindung ist nicht auf die dargestellten und beschriebenen Ausführungsbeispiele beschränkt. Es ist zum Beispiel möglich, eine abgewandelte Bauart bei anderen Transportsystemen einzusetzen. Die Erfindung umfaßt ferner alle fachmännischen Abwandlungen und Weiterbildungen sowie Teil- und Unterkonstruktionen der beschriebenen und/oder dargestellten Merkmale und Maßnahmen, sofern diese innerhalb des Schutbereichs liegen, der durch die Ansprüche bestimmt wird.

**Patentansprüche**

1. Vorrichtung zum Abdichten und Schließen von Feuerschutzabschlüssen (63) für Öffnungen (69) in Wänden und Decken bei durch Transportschienen (12) verbundenen Räumen, mittels Herausschwenken eines abgetrennten Teilstücks (13) der Transportschienen (12) aus der Bewegungsbahn eines im Brandfalle einschiebbaren Dichtelements (11), dadurch gekennzeichnet, daß

— das abgetrennte Teilstück (13) der Transportschiene (12) mindestens auf einer seiner Stirnseiten abgeschrägt und auf einem mit einer quer zur Förderrichtung (70) verlaufenden Achse oder Welle (14) schwenkbar verbundenen Traghebel (17) befestigt sowie um den Drehpunkt (62) der Achse oder Welle (14) herausschwenkbar ist,

— die erste die Lage des Drehpunktes (62) bestimmende Achse X—X mit einem Abstand (b) auf der der Transportschiene (12) abgekehrten Seite der Transportanlage verläuft,

— die zweite die Lage des Drehpunktes (62) bestimmende Achse Y—Y in einem Abstand (a) von derjenigen Brandwandseite verläuft, auf der der Feuerschutzabschluß (63) aufmontiert ist, wobei

— die Schwenkbewegung (15) des abgetrennten Teilstücks (13) über eine zwangsgeführte und somit zwangsgesteuerte Verbindungseinheit in beiden Richtungen erfolgt, die aus einer auf dem Dichtelement (11) befestigten Führungskurve (32, 43, 65), einer daran geführten Ablaufrolle (29, 41), einem Triebhebel (40, 66, 28) und ggf. einem Kegelradpaar (67) besteht, das mit der Welle oder Achse (14) des schwenkbaren Teilstücks (13) verbunden ist, oder

— die Schwenkbewegung (15) des abgetrennten Teilstücks (13) über von dem Dichtelement (11) unabhängige Antriebe wie kraftspeicher in Form von Zugfedern (22) oder Gegengewichte (25) oder Bewegungselemente in Form eines elektrischen Hubmagnets, eines pneumatischen oder hydraulischen Stellzylinders, eines mit der Achse oder Welle (14) fest oder mittels einer Kupplung (38) verbundenen Drehmagnets (27) oder Elektromotors (45) mit aufgesetztem Untersetzungsgetriebe (46) erfolgt.

2. Vorrichtung nach Anspruch 1, dadurch gekennzeichnet, daß das bewegbare Dichtelement (11) des Feuerschutzabschlusses (63) senkrecht zum Verlauf der Transportanlage schließt (Fig. 3+4), wobei am Triebhebel (66) eine verstellbare Verbindungsstange (72) mit einem um einen Drehpunkt (74) schwenkbaren Verbindungshebel (73) verbunden ist, und daß die Ablaufrolle (29), die in der Führungskurve (65) abrollt, auf der gegenüberliegenden Seite befestigt ist.

3. Vorrichtung nach Anspruch 1 oder 2, dadurch gekennzeichnet, daß die Ausschwenkvorrichtung mit Befestigungsmitteln (16a) auf einem der feststehenden Enden der Transportschienen (12) der Transportanlage befestigt ist, oder mit einem zusätzlichen Lagerbock (18) versehen ist, der am äußeren Rahmen (19) des Feuerschutzabschlusses direkt befestigt ist.

4. Vorrichtung nach Anspruch 1 bis 3, dadurch gekennzeichnet, daß zum Festhalten des Teilstückes (13) ein elektrischer Haftmagnet (37) dient.

5. Vorrichtung nach Anspruch 1 bis 4, dadurch gekennzeichnet, daß am bewegbaren Dichtelement (11) über einen Tragrahmen ein Abrollbügel (31) in einer vorbestimmten geometrischen Form angeordnet ist, der als Führungskurve oder Abrollbahn (32) für die kugelgelagerte Ablaufrolle (29) dient, wobei sich die Ablaufrolle (29) nach dem Anfahren durch den Abrollbügel (31) auf der Führungskurve (32) so bewegt, daß der Triebhebel (28) und damit das Teilstück (13) eine Schwenkbewegung (15) um eine bestimmte Gradzahl ausführen, wobei die hierfür benutzten Teile so ausgebildet sind, daß das Teilstück (13) die gewollte Endstellung (57) erreicht, bevor sich das quer oder senkrecht auf die Transportschienen (12) schließende Dichtelement (11) in den Bahnverlauf des schwenkbaren Teilstückes (13) bewegt, und daß, nachdem das Teilstück (13) die gewollte Endstellung (57) erreicht hat, keine Schwenkbewegung (15) mehr ausgeführt wird, obwohl das Dichtelement (11) auf der Bewegungsbahn (10) in seine Endstellung bis zum Anschlag bewegt wird.

6. Vorrichtung nach Anspruch 1 bis 5, dadurch gekennzeichnet, daß das schwenkbare Teilstück (13) im eingeschwenkten Zustand (Fig. 11) über eine aus Nocke (83), Anlaufrolle (84), Nockenhebel (82), Kugelgelenk (87), Verbindungsstange (81), Kipphebel (80), Riegelhebel (78) und Kopfbolzen (79) mit konischem Kopf bestehende Verriegelung während des Transportbetriebes festgehalten wird, und nachdem die Entriegelung durch die Bewegung des Dichtelementes (11) über die Nocke (83) erfolgt ist, losgelassen wird.

7. Vorrichtung nach Anspruch 6, dadurch gekennzeichnet, daß alle notwendigen Bewegungsvorgänge zum Herausschwenken des Teilstückes (13) und zur Ver- und Entriegelung von dem Dichtelement (11) bestimmt werden, wobei beim Schließvorgang die Schwenkbewegung des Teilstückes (13) erst beginnen kann, wenn der Kopfbolzen (79) über die Nocke (83) entriegelt ist, wobei eine Zugfeder (85) als Kraftspeicher für das Einschwenken des Riegelhebels (78) dient.

**Claims**

1. Device for sealing and closing fire protection covers (63) for openings (69) in walls and ceilings connected by means of transport rails (12) by the hinged action of a disconnected section (13) of the transport rail (12) out of the path of motion of a sealing element (11) which in the case of a fire can be inserted, with the characteristics that

— the disconnected section (13) of the transport rail (12) is, at least on one of its front sides, bevelled and is fixed on a bearing lever (17) with hinged connection whose axis or shaft (14) is at right angles to the direction of transport (70) and which is also able to be swivelled out around the centre of rotation (62) of the axis or shaft,

— the first axis X—X which determines the position of the centre of rotation is at a distance (b) from the side of the transport mechanism which is turned away from the transport rail (12),

— the second axis Y—Y which determines the position of the centre of rotation (62) is at a distance (a) from the particular side of the fire wall on which the fire protection cover (63) is mounted, in which case

— the hinged action (15) of the disconnected section (13) occurs in both directions via a connection unit which is subject to restricted guidance and thus to regulated guidance, and which consists of a curved guidance element (32, 43, 65) fixed on the sealing element (11), a feed roller (29, 41) which runs along the guidance element, a driving lever (40, 66, 28) and in some case a pair of bevel wheels (67) which is connected to the shaft or axis (14) of the hinged section (13), or

— the hinged action (15) of the disconnected section (13) occurs via a driving mechanism which is independent of the sealing element (11), such as a power storage element in the form of tension springs (22) or counterweights (25), or movement elements in the form of an electrical lifting magnet, a pneumatic or hydraulic adjustable cylinder, a rotary magnet (27) rigidly connected to the axis or shaft (14) or connected by means of a coupling (38), or an electric motor (45) with a speed reduction gear attached to it (46).

2. Device according to claim number 1, but with the characteristics that

— the movable sealing element (11) of the fire protection cover (63) closes perpendicular to the direction of motion of the transport mechanism (fig. 3+4), in which case an adjustable connecting rod (72) on the driving lever (66) is connected to a connecting lever (73) which can be swivelled around a centre of rotation (74), and the feed roller (29) which runs along the curved guidance element (65) is fixed on the opposite side.

3. Device according to claim number 1 or claim number 2, but with the characteristics that

— the hinged device is fixed by some means (16a) to one of the stationary ends of the transport rails (12) of the transport mechanism, or is fitted with an additional bearing bracket (18) which is directly fixed to the outer frame (19) of the fire protection cover.

4. Device according to claim numbers 1 thru 3, but with the characteristics that

— there is an electrical contact magnet (37) which serves to hold the section (13) in place.

5. Device according to claims numbers 1 thru 4, but with the characteristics that

— a bracket (31) in a predetermined geometric form is positioned via a bearing frame element on the moveable sealing element (11) and serves as a curved guidance or rolling track (32) for the feed roller (29) running on ball bearings, in which case the feed roller (29) after having been started by the bracket (31) moves on the curved guidance (32) in such a way that the driving lever (28) and thus the section (13) are subject to a certain hinged action (15), whereby the elements used for this purpose have been so designed that the section (13) reaches the desired final position (57) before the sealing element (11) which closes on the transport rails (12) either diagonally or at right angles can move into the path of the swivelling section (13) and

— after the section (13) has reached the desired final position (57), no further hinged action (15) is carried out, although the sealing element (11) is moved on the path of motion (10) into final position until it has hit the end.

6. Device according to claims 1 thru 5, but with the characteristics that

— the hinged section (13) is held in position when the transport mechanism is operating and when in hinged position (fig. 11) by means of a locking device consisting of cam (83), roller (84), cam lever (82), ball-type universal joint (87), connecting rod (81), rocker arm (80), locking lever (78) and set bolt (79) with a conical head, and is released after the locking device has disengaged through the movement of the sealing element (11) by means of the cam (83).

7. Device according to claim 6, but with the characteristics that

— all necessary stages of the movement involved in the section (13) swivelling out and involved in the functioning of the locking mechanism and its release are determined by the sealing element (11), such that during the closing process the hinged action of the section (13) can only commence when the set bolt (79) is released by the locking mechanism via the cam (83), which involves a tension spring (85) acting as the power storage element for the hinged action of the locking lever (78).

**Revendications**

1. Dispositif d'étoupage et d'obturation der fermetures coupe-feu (63) pour ouvertures (69) dans les parois et les plafonds, pour les locaux reliés par des rails de transport (12), en faisant pivoter un tronçon (13) des rails de transport (12) sur la voie de déplacement d'un élément d'étanchéité (11) introductible en cas d'incendie, le dispositif étant caractérisé par le fait que

— le tronçon séparé (13) du rail de transport (12) est biseauté sur au moins l'une de ses faces frontales, et fixé sur un levier de support (17) relié par pivotement à un axe ou arbre (14) placé perpendiculiarement à la direction du transport (70) et susceptible de pivoter autour du point d'appui (62) de l'axe ou de l'arbre,
— le premier axe X—X, déterminant la position du point d'appui (62) se trouve placé à une distance (b), du côté du dispositif de transport opposé au rail de transport (12)
— le deuxième axe Y—Y, déterminant la position du point d'appui (62) se trouve placé à une distance (a) du côté de la paroi coupe-feu sur laquelle est montée la fermeture coupe-feu (63), en précisant que,
— le pivotement (15) du tronçon séparé (13) s'effectue au moyen d'une unité de raccordement dans les deux directions, à-guidage forcé et par conséquent à commande forcée, laquelle unité se compose d'une courbe de guidage (32, 43, 65), fixée sur l'élément d'étanchéité (11), d'un rouleau d'écoulement (29, 41) se déplaçant sur celle-ci, d'un levier moteur (40, 66, 28) et évant. d'un couple de pignons côniques (67) relié à l'arbre ou à

FIG. 1

## Schnitt: A-A

FIG. 2

2

B

65

29

73

74

72

66

10

11

69

15

12

FIG. 3

Schnitt: B – B

FIG. 4

FIG. 5

5

FIG. 6

FIG. 7

0 004 677

Schnitt A-A (Fig.6)

FIG. 8

Schnitt A-A (Fig.7)

46 38 18 17 16 16a 13 11 10

Dichtelement

44 45 14 40 41 60 61 42 43

FIG. 9

Schnitt: B-B

FIG. 10

FIG. 11

FIG. 12